# EUROPEAN PATENT SPECIFICATION

(11) **EP 4 273 069 B1**
(45) Date of publication and mention of the grant of the patent: **30.09.2026**
(21) Application number: 22749036.4
(22) Date of filing: 27.01.2022
(51) Int. Cl.: A47J 31/40, B65D 85/804

(54) **ANTI-DRIP BEVERAGE DISPENSING ASSEMBLY FOR ELECTRIC APPLIANCE**
TROPFSCHUTZ-GETRÄNKEABGABEANORDNUNG FÜR EIN ELEKTRISCHES GERÄT
ENSEMBLE DE DISTRIBUTION DE BOISSON ANTI-GOUTTE POUR APPAREIL ÉLECTRIQUE

(30) Priority: 03.02.2021 US 202117166150
(43) Date of publication of application: 08.11.2023
(73) Proprietor: Haier Smart Home Co., Ltd., Qingdao, Shandong 266101 (CN); Qingdao Haier Refrigerator Co., Ltd, Qingdao, Shandong 266101 (CN); Haier US Appliance Solutions, Inc., Wilmington, DE 19801 (US)
(72) Inventor: CHERNOV, Gregory Sergeevich, Wilmington, Delaware 19801 (US); LI, Jianwu, Wilmington, Delaware 19801 (US)
(74) Representative: Gille Hrabal Partnerschaftsgesellschaft mbB Patentanwälte
(86) International application number: PCT/CN2022/074311
(87) International publication number: WO 2022/166757

(56) References cited:
- WO-A1-03/105645
- CN-A- 104 603 027
- CN-A- 105 263 375
- CN-A- 107 847 071
- CN-A- 108 309 055
- CN-A- 110 312 665
- CN-U- 210 028 634
- FR-A1- 3 059 986
- US-A1- 2003 056 661
- US-A1- 2018 346 239

## Description

### FIELD OF THE INVENTION

The present subject matter relates generally to beverage dispensers, such as a single serve beverage dispenser for use in domestic appliances.

### BACKGROUND OF THE INVENTION

Recently, popularity for appliances capable of generating beverages, such as single serve (e.g., hot) beverages, has increased. These beverages (e.g., coffee or tea) may be generated using heated liquid water provided to and through a dispenser of the appliance. For instance, dispensers may use brew modules that can receive a single serve brew pod or cup holding a particulate (e.g., coffee grounds, tea leaves, etc.) for a desired beverage. Such brew pods may be prepacked (e.g., by a manufacturer as a disposable unit) or filled by an end user (e.g., as a reusable unit or cup). Commonly, dispensers have an outlet that is directed downward.

One of the issues that is common to beverage dispensers is a slow drip of liquid that may continue from the outlet of a dispenser even after substantially all of the beverage has been dispensed. In particular, a residual volume of liquid may remain within the beverage dispenser after a brewing process has been completed. This residual volume of liquid may, for example, may become temporarily trapped within the particulate of the brew pod before being gradually released from the brew pod (e.g., as motivated by gravity) and flowed to the outlet of the dispenser, where it may be released in gradual drip. In practice, it is virtually impossible to draw all of the liquid from a beverage dispenser to prevent this gradual drip. Some existing appliances have incorporated complicated or pressure-driven valves to try to reduce the drip. Such valves may be prone to failure, however-especially over time. Moreover, existing assemblies can be difficult to remove from an appliance and be placed elsewhere (e.g., on a table) without risk of spilling liquid/particulate.

Additionally or alternatively, difficulties may arise in conventional system when attempting to clean the brew module. In particular, the brew or dispense chamber may become dirty over time as particulate or residue may accumulate within the dispense chamber. Nonetheless, many brew modules are permanently affixed to the appliance. Even brew modules that are not fixed to the appliance may be difficult to adequately clean since, for instance, smaller crevices or needles may be hard for a user to access (e.g., for practical reasons, safety concerns, etc.).

Accordingly, a domestic appliance that includes improved features for dispensing beverages would be useful. For instance, beverage dispensing assemblies for appliances that prevent dripping from the outlet would be useful. Additionally or alternatively, beverage assemblies for appliances that may be readily removed, cleaned, or reinstalled would be useful.

FR3059986A1 relates to a container (20) for beverages. The utility model relates to a beverage container (10) comprising: a wall (24, 25, 35) defining at least one compartment (30, 34) designed to receive at least one component (32) of a beverage, and a dispensing circuit of said component (32), said dispensing circuit comprising a cavity (33) for receiving said component (32) when the container is in use and being equipped with a dispensing aperture (41). According to the utility model, the distribution loop comprises a self-starting siphon (40), and the self-starting siphon (40) allows the component (32) of the cavity (33) to be at least partially transferred to the outside through the distribution hole (41) when the container (20) is used. WO03105645A1 discloses an apparatus for preparing a beverage fit for consumption with a fine-bubble froth layer, such as coffee or cappuccino, provided with a beverage unit for dispensing a beverage under pressure, at least one nozzle to which the beverage is fed under pressure to generate a jet of the beverage, a buffer reservoir for collecting the jet of the beverage so that, in use, a liquid level of the beverage is created in the buffer reservoir into which the jet squirts to obtain the fine-bubble froth layer and an outlet path for discharging the beverage with the fine-bubble froth layer from the buffer reservoir.

### BRIEF DESCRIPTION OF THE INVENTION

The problem is solved by the beverage dispensing assembly according to the appended claims, of which the dependent claims describe preferred embodiments.

Aspects and advantages of the invention will be set forth in part in the following description, or may be obvious from the description, or may be learned through practice of the invention.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 provides a front, elevation view of a refrigerator appliance according to an exemplary embodiment of the present disclosure.
FIG. 2 provides a front, elevation view of a dispensing assembly of the exemplary refrigerator appliance of FIG. 1.
FIG. 3 provides a perspective view of an exemplary brew module for use with the exemplary dispensing assembly of FIG. 2, wherein a lid is shown in a first position.
FIG. 4 provides a perspective view of the exemplary brew module of FIG. 3, wherein a portion of the lid is removed for clarity.
FIG. 5 provides a perspective view of the exemplary brew module of FIG. 3, wherein the lid is shown in a second position.
FIG. 6 provides a perspective view of the exemplary brew module of FIG. 5, wherein a portion of the lid is removed for clarity.
FIG. 7 provides a perspective view of a portion of the exemplary brew module of FIG. 3.
FIG. 8 provides a sectional elevation view of a portion of an exemplary dispensing assembly, wherein the lid is in the second position.
FIG. 9 provides a perspective view of a portion of an exemplary dispensing assembly, wherein a portion of the lid in the first position is removed for clarity.
FIG. 10 provides a sectional elevation view of an exemplary brew module for use with the exemplary dispensing assembly of FIG. 2.
FIG. 11 provides a perspective view of a sub-chamber portion of the lid of the exemplary brew module of FIG. 10.
FIG. 12 provides a sectional perspective view of a sub-chamber portion of the lid of the exemplary brew module of FIG. 10.
FIG. 13 provides an elevation view of the exemplary mesh cup of FIG. 10.
FIG. 14 provides a schematic sectional view of a bottom portion of a brew module according to exemplary embodiments of present disclosure.
FIG. 15 provides a schematic sectional view of a bottom portion of a brew module according to further exemplary embodiments of present disclosure.
FIG. 16 provides a schematic sectional view of a bottom portion of a brew module according to still further exemplary embodiments of present disclosure.
FIG. 17 provides a schematic sectional view of a bottom portion of a brew module according to yet further exemplary embodiments of present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

As used herein, the term "or" is generally intended to be inclusive (i.e., "A or B" is intended to mean "A or B or both"). The terms "first," "second," and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

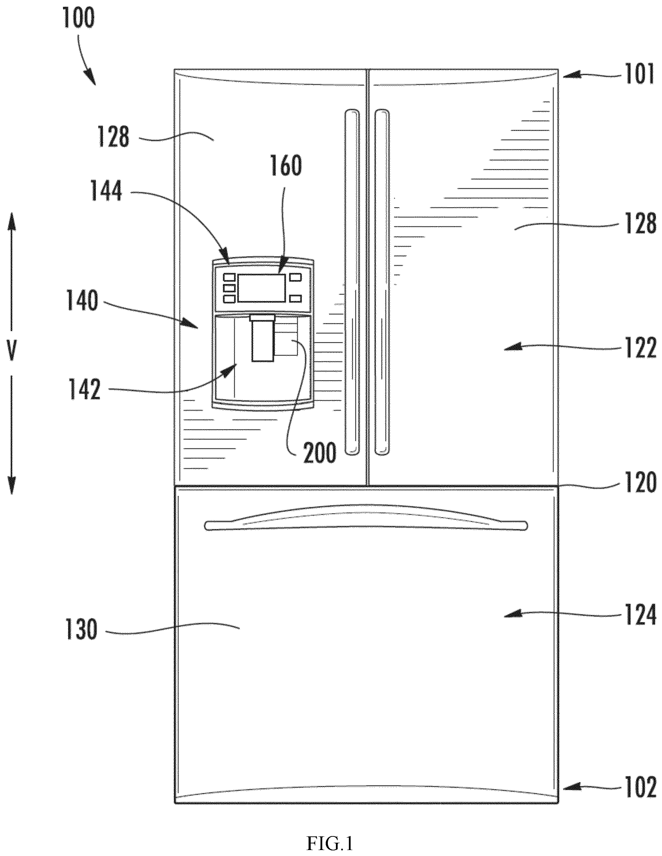

Turning now to the figures, FIG. 1 provides a front, elevation view of a domestic appliance, according to an example embodiment of the present subject matter. Specifically, FIG. 1 illustrates a domestic appliance that is a refrigerator appliance 100. Refrigerator appliance 100 includes a cabinet or housing 120. Housing 120 extends between an upper portion 101 and a lower portion 102 along a vertical direction V. Housing 120 defines chilled chambers (e.g., a fresh food compartment 122 positioned adjacent upper portion 101 of housing 120 and a freezer compartment 124 arranged at lower portion 102 of housing 120). Housing 120 also defines a mechanical compartment (not shown) for receipt of a sealed cooling system for cooling fresh food compartment 122 and freezer compartment 124.

Refrigerator appliance 100 is generally referred to as a bottom-mount refrigerator appliance. However, it should be understood that refrigerator appliance 100 is provided by way of example only. Thus, the present subject matter is not limited to refrigerator appliance 100 and may be utilized in any suitable domestic appliance having a beverage dispenser. For example, one of skill in the art will understand that the present subject matter may be used with side-by-side style refrigerator appliances or top-mount refrigerator appliances, as well as stand-alone beverage or brewing appliances.

In exemplary embodiments, refrigerator doors 128 are rotatably hinged to housing 120 proximate fresh food compartment 122 in order to permit selective access to fresh food compartment 122. A freezer door 130 is arranged below refrigerator doors 128 for accessing freezer compartment 124. Freezer door 130 is mounted to a freezer drawer (not shown) slidably coupled within freezer compartment 124.

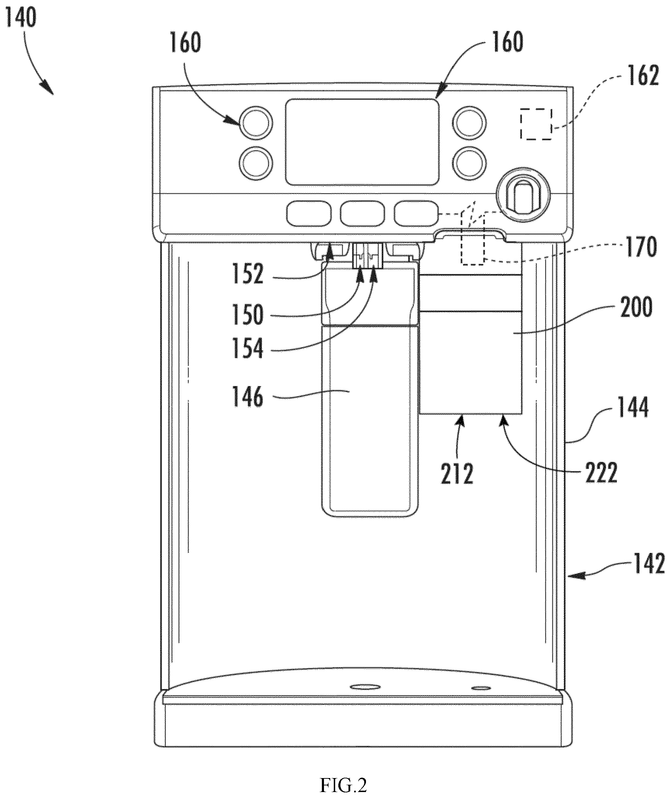

As shown in FIGS. 1 and 2, refrigerator appliance 100 may also include a dispensing assembly 140 for dispensing various fluids, such as liquid water or ice, to a dispenser recess 142 defined on one of refrigerator doors 128. In some embodiments, dispensing assembly 140 includes a dispenser 144 positioned on an exterior portion of refrigerator appliance 100, for example, within dispenser recess 142. Dispenser 144 includes several outlets for accessing ice, chilled liquid water, and heated liquid water. In order to access ice, chilled liquid water, and heated liquid water; water-dispensing assembly 140 may, for example, include a paddle 146 mounted below a chilled water outlet 150, an ice outlet 152, and a heated water outlet 154.

During operation of dispensing assembly 140, a user may urge a vessel, such as a cup, against paddle 146 to initiate a flow of chilled liquid water, heated liquid water or ice into the vessel within dispenser recess 142. In particular, a control panel or user interface panel 160 may be provided for controlling the mode of operation of dispenser 144 (e.g., for selecting chilled liquid water, heated liquid water, crushed ice, or whole ice.) User interface panel 160 may include a chilled water dispensing button (not labeled), an ice-dispensing button (not labeled) and a heated water dispensing button (not labeled) for selecting between chilled liquid water, ice, and heated liquid water, respectively. User interface panel 160 may also include a display component, such as a digital or analog display device designed to provide operational feedback to the user.

Outlets 150, 152, 154 and paddle 146 may comprise an external part of dispenser 144 positioned at or adjacent dispenser recess 142 (e.g., a concave portion defined in an outside surface of refrigerator door 128). Dispenser 144 is positioned at a predetermined elevation convenient for a user to access ice or liquid water (e.g., enabling the user to access ice without the need to bend-over and without the need to access freezer compartment 124). In the example embodiment, dispenser 144 is positioned at a level that approximates the chest level of a user.

Operation of the refrigerator appliance 100 can be regulated by a controller 162 that is operatively coupled to user interface panel 160 or various sensors as discussed below. User interface panel 160 provides selections for user manipulation of the operation of refrigerator appliance 100 such as, for example, selections between whole or crushed ice, chilled water, and other various options. In response to user manipulation of the user interface panel 160 or sensor signals, controller 162 may operate various components of the refrigerator appliance 100. Controller 162 may include a memory and one or more microprocessors, CPUs or the like, such as general or special purpose microprocessors operable to execute programming instructions or micro-control code associated with operation of refrigerator appliance 100. The memory may represent random access memory such as DRAM, or read only memory such as ROM or FLASH. In one embodiment, the processor executes programming instructions stored in memory. The memory may be a separate component from the processor or may be included onboard within the processor. Alternatively, controller 162 may be constructed without using a microprocessor (e.g., using a combination of discrete analog or digital logic circuitry; such as switches, amplifiers, integrators, comparators, flip-flops, AND gates, and the like) to perform control functionality instead of relying upon software.

Controller 162 may be positioned in a variety of locations throughout refrigerator appliance 100. In the illustrated embodiment, controller 162 is located within the user interface panel 160. In other embodiments, the controller 162 is positioned at any suitable location within refrigerator appliance 100, such as for example within a fresh food chamber, a freezer door, etc. Input/output ("I/O") signals may be routed between controller 162 and various operational components of refrigerator appliance 100. For example, user interface panel 160 may be in communication with controller 162 via one or more signal lines or shared communication busses.

As illustrated, controller 162 may be in communication with the various components of dispensing assembly 160 and may control operation of the various components. For example, the various valves, switches, etc. may be actuatable based on commands from the controller 162. As discussed, interface panel 160 may additionally be in communication with the controller 162. Thus, the various operations may occur based on user input or automatically through controller 162 instruction.

In certain embodiments, refrigerator appliance 100 also includes features for generating heated liquid water and directing such heated liquid water to dispenser 144. Refrigerator appliance 100 need not be connected to a residential hot water heating system in order to supply heated liquid water to dispenser 144. As would be understood, a water heating assembly may be provided and include, for example, a variety of water supplies, hot water tanks, heating elements, temperature sensors, and control valves to heat water from a well or municipal water supply, store the heated water, and supply the heated water to dispenser 144.

Dispensing assembly 140 is optionally capable of providing heated water at various temperatures depending on the type of beverage being brewed. For example, when brewing ground coffee, water for brewing may be heated to between one hundred eighty degrees Fahrenheit and one hundred ninety degrees Fahrenheit. Additionally or alternatively, dispensing assembly 140 may be adjusted to provide water for making beverages at any suitable temperature.

Dispensing assembly 140 may include a water conduit or delivery tube 170 for supplying heated water from the water heating assembly to dispenser 144. Optionally, water delivery tube 170 may be embodied by a moving water delivery tube. Moving water delivery tube 170 may be any suitably rigid conduit or piping that is configured for moving in a substantially vertical direction V. For instance, moving water delivery tube 170 may extend between a retracted position where it is retracted within dispenser 144 and an extended position where it protrudes downward along the vertical direction V away from dispenser 144. In certain embodiments, moving water delivery tube 170 is a vertically oriented stainless-steel tube that extends into and provides heated water to a brew module 200. A drive assembly (not pictured), such as an electric drive motor and worm gear, may be provided, to move water delivery tube 170.

Referring generally to FIGS. 2, 3, and 10, dispensing assembly 140 includes a brew module 200 according to exemplary embodiments of the present subject matter. Generally, brew module 200 is mountable within dispenser recess 142 such that brew module 200 can be in fluid communication with water delivery tube 170 when mounted within dispenser recess 142. For example, when brew module 200 is installed in dispenser 144, an inlet 206 defined through a lid 208 above a brewing or dispensing body 202 is in vertical alignment with the water delivery tube 170. Dispenser 144 may be configured for extending water delivery tube 170 downward along the vertical direction V such that water delivery tube 170 is received into inlet 206. During use, heated water from the water heating assembly may flow into brew module 200 via water delivery tube 170 at inlet 206. Within brew module 200, heated water may mix with, dissolve, or extract portions of a particulate material (e.g., held in a brew pod 210) to form a liquid beverage (e.g., a liquid coffee or tea solution), which may then exit brew module 200 through an outlet 212 defined through dispensing body 202.

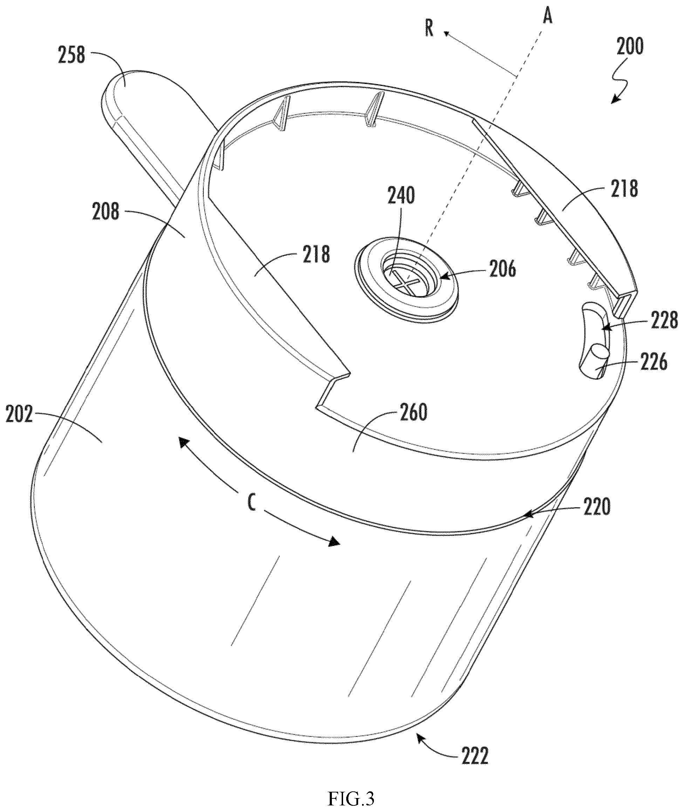

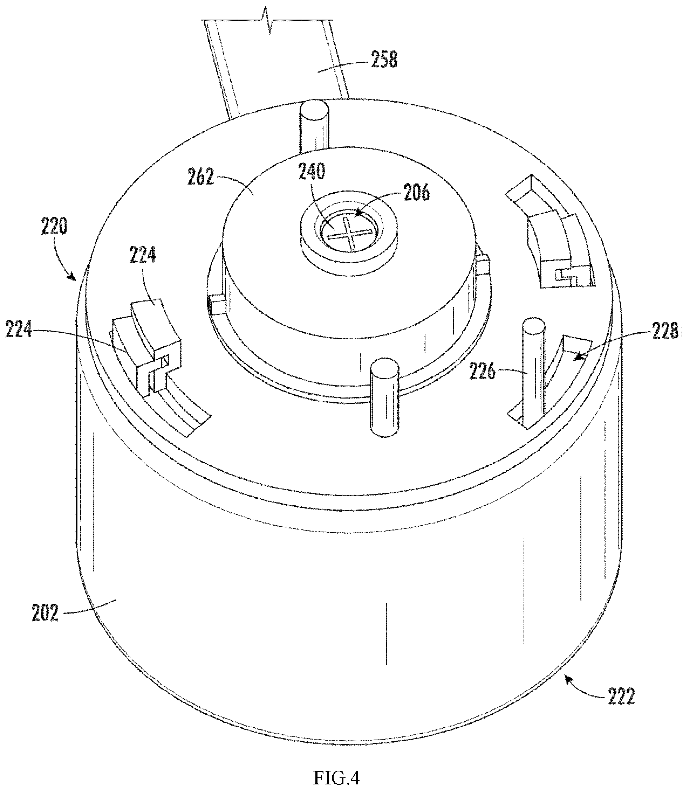

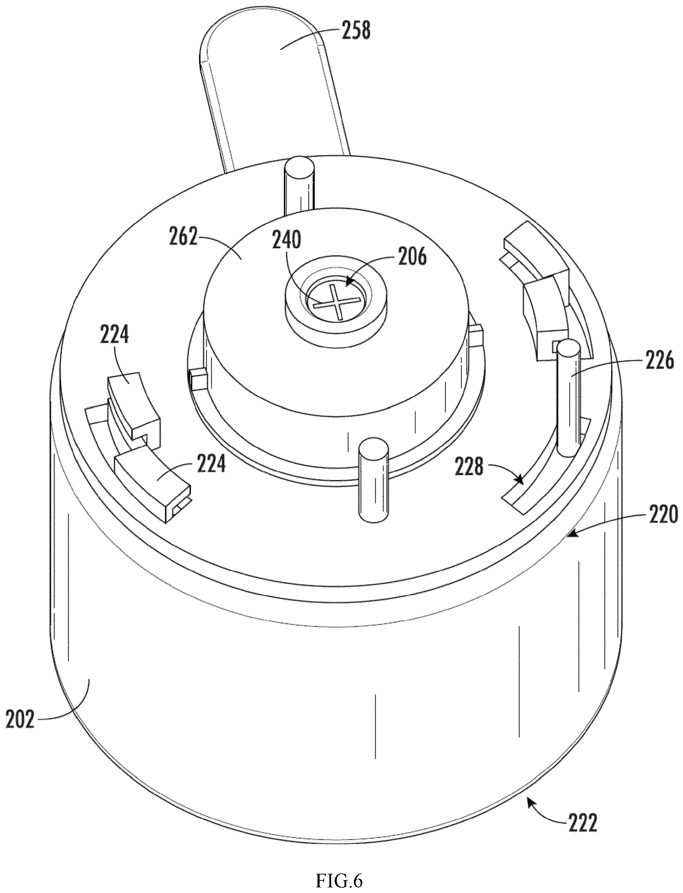

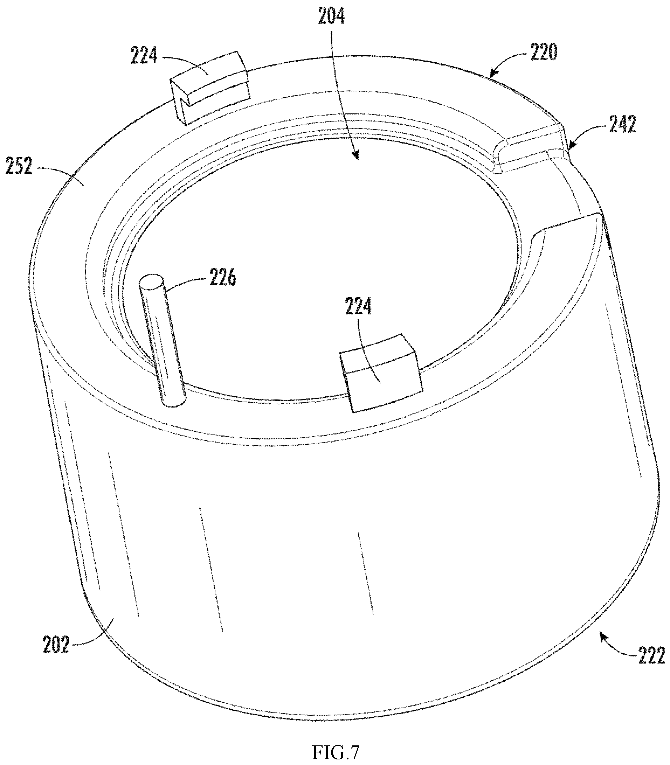

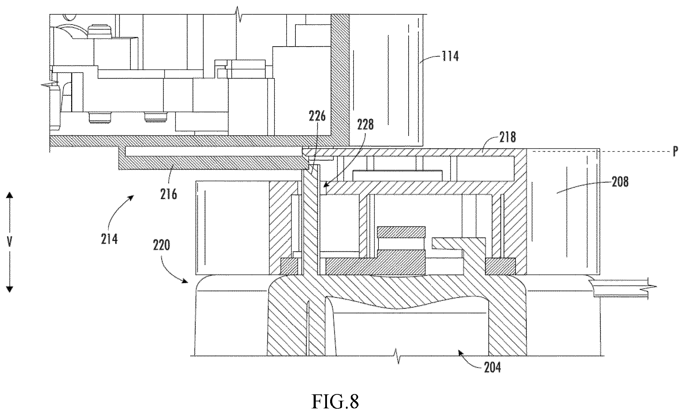

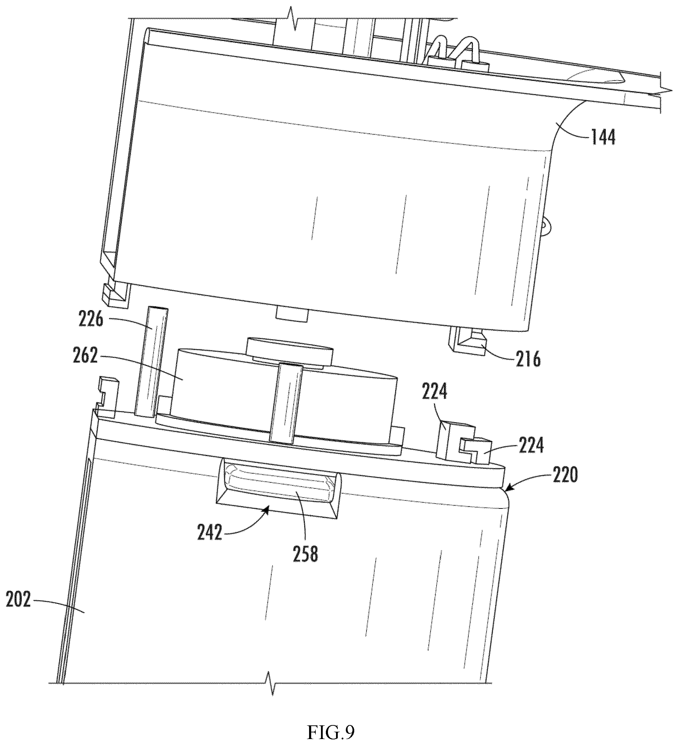

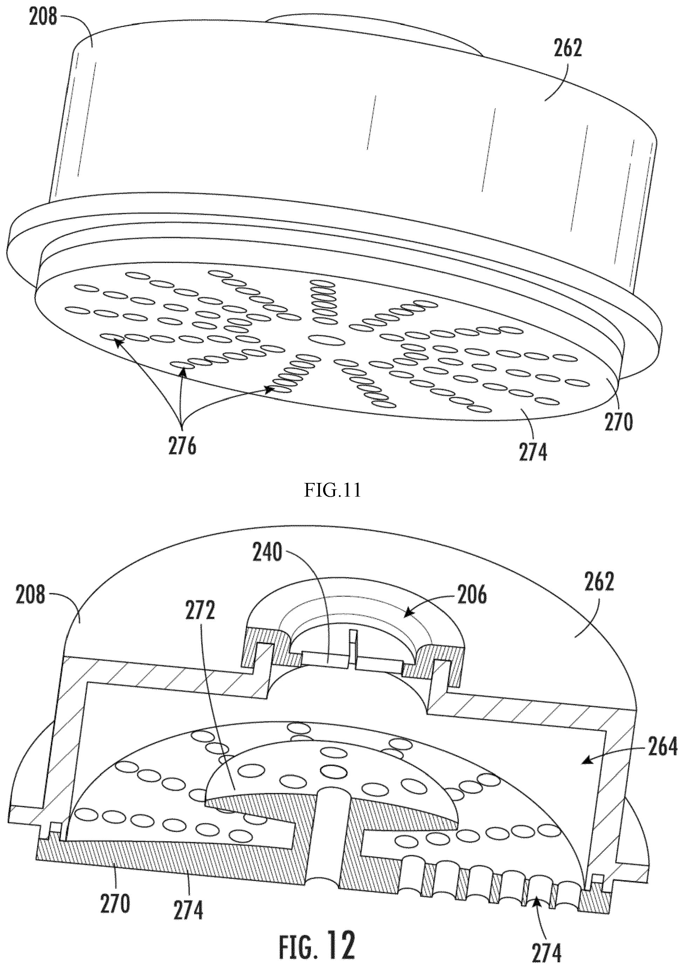

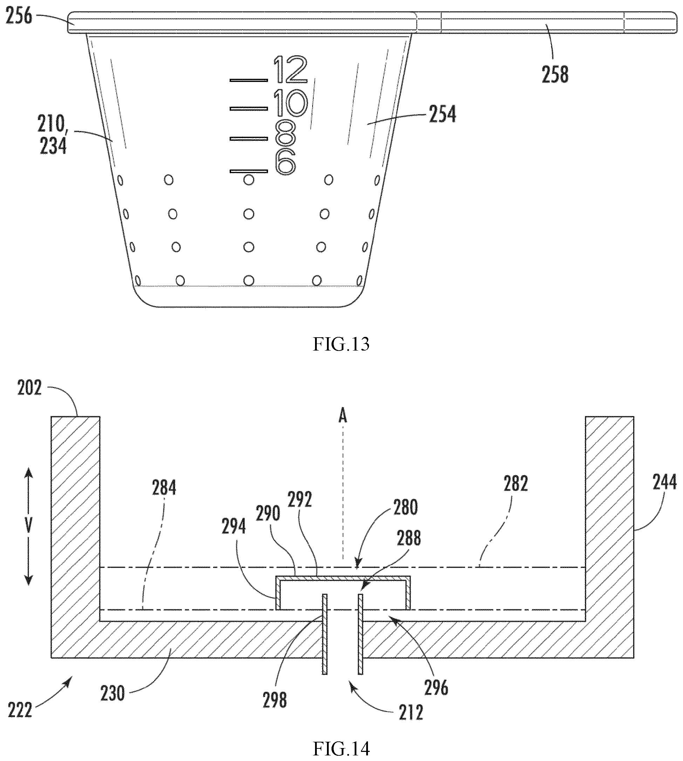

Referring now generally to FIGS. 3 through 17, brew module 200 may include a body 202 that defines a dispense chamber 204. Dispense chamber 204 may be a substantially cylindrical chamber that is configured to receive a brew pod 210 (e.g., sealed, disposable cup or reusable mesh cup 234). A lid 208 can be rotatably attached to dispensing body 202 and selectively removed to permit selective access to dispense chamber 204. More specifically, lid 208 may be rotated onto dispensing body 202 about a dispenser axis A defined by dispensing body 202, as described in detail below.

Turning especially to FIGS. 3 through 10, appliance 100 may include a slide joint 214 formed between dispenser 144 and lid 208. For example, dispenser 144 may define one or more flanges 216 that extend down from an upper wall of dispenser 144 to receive one or more corresponding rails 218 disposed on brew module 200. In particular, such rails 218 may be disposed on lid 208 (e.g., at a top portion thereof). When brew module 200 is connected to dispenser 144, rails 218 may support brew module 200 on dispenser 144. Moreover, rails 218 (e.g., with flanges 216) may define a slide path P along which brew module 200 moves. Thus, when connecting or removing brew module 200 to/from dispenser 144, rails 218 may follow the slide path P to slide on the corresponding flanges 216 (e.g., horizontally).

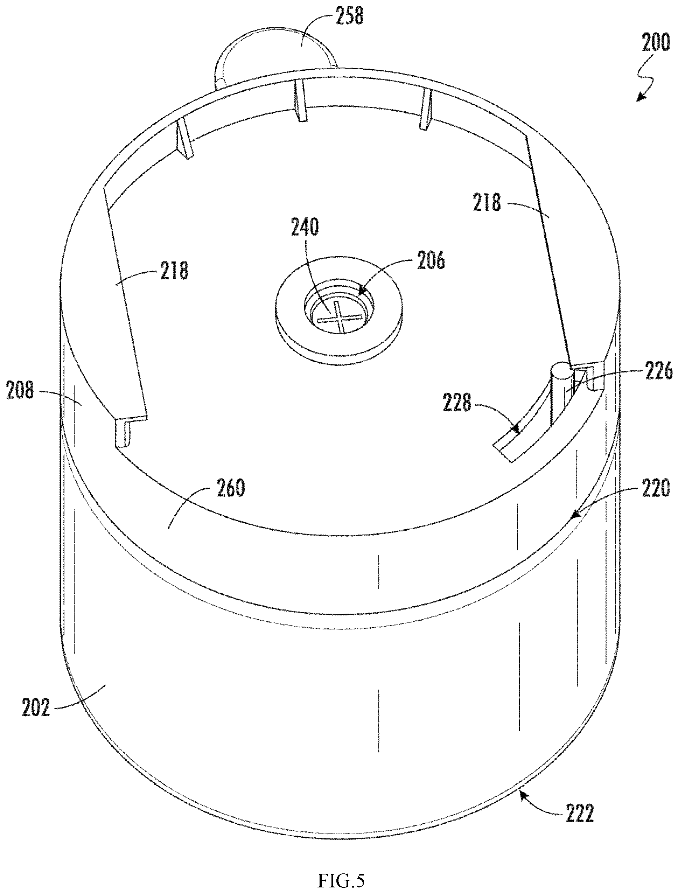

When attached to dispensing body 202 (e.g., apart from dispenser 144), lid 208 is rotatable about the dispenser axis A between a first position (FIGS. 3, 4, and 9) and a second position (FIGS. 5, 6, and 8). In certain embodiments, one or more mating teeth 224 (e.g., matched C-shaped hooks, threads, etc.) may hold lid 208 and dispensing body 202 together. For example, one or more teeth 224 extending from dispensing body 202 (e.g., upward at an upper end 220 of dispensing body 202) and one or more corresponding teeth 224 extending from lid 208 (e.g., downward at a lower end of lid 208) may selectively interlock together. In the exemplary embodiments, the mating teeth 224 are interlocked in circumferential alignment in the first position. Thus, the first position may restrict or prevent vertical movement of the lid 208 relative to the dispensing body 202. By contrast, in the second position, the mating teeth 224 may be unengaged and circumferentially spaced apart. Thus, the second position may permit vertical movement (e.g., separation) of lid 208 relative to the dispensing body 202. Advantageously, selective separation of the dispensing body 202 and lid 208 may permit full access to dispense chamber 204. Additionally or alternatively, thorough cleaning of brew module 200 may be notably permitted by separating dispensing body 202 and lid 208 (e.g., in a repeatable manner that allows for selective reattachment of lid 208 to dispensing body 202).

In some embodiments, a contact pin 226 is provided on brew module 200 to selectively interfere with the connection at slide joint 214 (e.g., when lid 108 is in the second position or otherwise not in the first position). As shown, contact pin 226 may movably disposed within a portion of the slide path P. In particular, contact pin 226 may selectively extending through the slide path P (e.g., perpendicular or nonparallel thereto adjacent to a rail 218) in the second position (or otherwise outside of the first position). By extending through the slide path P in the second position, contact pin 226 may block at least one rail 218 from sliding or moving on the corresponding flange 216. By contrast, in the first position, contact pin 226 may be spaced apart from the slide path and not extend through the same, thereby permitting slidable engagement between the corresponding rail(s) 218 and flange(s) 216.

In exemplary embodiments, contact pin 226 extends from dispensing body 202. For example, contact pin 226 may extend vertically or at a non-perpendicular (e.g., parallel) angle relative to dispenser axis A. In some such embodiments, contact pin 226 extends from the upper end 220 of dispensing body 202. As shown, contact pin 226 may be disposed radially outward from dispenser axis A. Optionally, contact pin 226 may extend from a portion or sidewall 232 of dispensing body 202 that is disposed radially outward from dispense chamber 204.

When assembled, contact pin 226 may extend through at least a portion of lid 208. In particular, lid 208 may define a pin aperture 228 through which contact pin 226 extends. As shown, contact pin 226 may thus be extended above at least a portion of rail 218 (e.g., in the second position). In some embodiments, pin aperture 228 permits circumferential movement or rotation of contact pin 226 therein. Optionally, pin aperture 228 may extend from a first circumferential point to a second circumferential point which in turn may engage contact pin 226 at the first position and the second position, respectively. Thus, pin aperture 228 may define or dictate first position or second position, at least in part.

Advantageously, the presently disclosed brew module 200 may be physically prevented from connecting to appliance 100 if or when (i.e., in response to) lid 208 is not fully secured (or otherwise in a predetermined desirable position) on dispensing body 202.

Turning especially to FIGS. 3, 10, and 14, portions of dispensing body 202 are illustrated. As shown, dispensing body 202 generally extends along the dispenser axis A (e.g., vertically) between an upper end 220 and a lower end 222 that defines the outlet 212. Between upper end 220 and lower end 222 dispense chamber 204 is defined. For instance, a bottom wall 230 and sidewall 232 of dispensing body 202 may define dispense chamber 204 as a generally cylindrical chamber within which a brew pod 210 (e.g., mesh cup 234) may be received. Generally, bottom wall 230 may be disposed at bottom end or otherwise proximate thereto. In some embodiments, bottom wall 230 may form a concave surface along dispense chamber 204. The concave surface may, for instance, descend radially inward toward outlet 212 or dispenser axis A. Additionally or alternatively, one or more support legs 236 may extend from the bottom wall 230 (e.g., opposite the dispense chamber 204) at the lower end 222. When dispensing body 202 or brew module 200, generally, is placed on a support surface (e.g., countertop, table, etc.) apart from appliance 100, the support legs 236 may hold outlet 212 or bottom wall 230 above the support surface.

In some embodiments, a siphon conduit 280 is provided on dispensing body 202. Specifically, siphon conduit 280 may extend from a wall (e.g., bottom wall 230 or a lower portion of sidewall 232) of dispensing body 202 within dispense chamber 204. In the illustrated embodiments, siphon conduit 280 extends from dispensing body bottom wall 230 within dispense chamber 204. Moreover, siphon conduit 280 may be disposed upstream of the outlet 212. Thus, liquid (e.g., a brewed beverage, water, etc.) flowing through dispense chamber 204 to outlet 212 may be directed through siphon conduit 280. Optionally, siphon conduit 280 may define an exclusive output path for liquid to outlet 212. Additionally or alternatively, outlet 212 may be defined, at least in part by siphon conduit 280. When assembled, siphon conduit 280 may be held below brew pod 210.

As will be described in greater detail below, siphon conduit 280 may generally define one or more thresholds for dispensing liquid from dispense chamber 204. As an example, siphon conduit 280 may define a dispensing threshold 282 to set a predetermined initiation height of liquid dispensing from the dispense chamber 204. In some such embodiments, dispensing threshold 282 is defined within dispense chamber 204 above (e.g., higher than) outlet 212 relative to the vertical direction V. During use, the empty or evacuated dispense chamber 204 (e.g., prior to a dispensing or brewing operation) may be required to fill with liquid to at least the dispensing threshold 282 before any volume of liquid can escape through outlet 212.

As an additional or alternative example, siphon conduit 280 may define a drain threshold 284 below (e.g., lower than) dispensing threshold 282 within dispense chamber 204. Generally, drain threshold 284 sets a predetermined cut-off height of liquid dispensing from dispense chamber 204 (e.g., through outlet 212). During use, after dispensing from outlet 212 has begun (e.g., after an initial volume of liquid has risen to or above the predetermined initiation height), continued dispensing from outlet 212 may be halted once the liquid falls to the drain threshold 284. Specifically, an air column of air drawn through into siphon conduit 280 from dispense chamber 204 may halt the dispensing. The air column may further prevent a slow release or dripping of liquid from outlet 212. After a liquid (e.g., beverage) is evacuated from dispense chamber 204, residual volumes may be prevented from dripping from outlet 212. Moreover, the volume of liquid within dispense chamber 204 may be required to rise above the drain threshold 284 to at least the dispensing threshold 282 before dispensing of liquid from outlet 212 may resume. Thus, the dispensing threshold 282 may be set according to (e.g., as a function of) a predetermined threshold volume of liquid that may accumulate within dispense chamber 204 following a dispensing operation. For instance, from calculations or experimental data, the predetermined threshold volume may be determined (e.g., as the volume of liquid accumulating following expiration of a preset period of time from the initial reception of water through the inlet 206); and the dispensing threshold 282 may be set as a function of the predetermined threshold volume (e.g., at a height within dispense chamber 204 that is above the height reached by the predetermined threshold volume).

In certain embodiments, siphon conduit 280 includes a conduit tube 286 that extends (e.g., upward) from bottom wall 230 within dispense chamber 204. Specifically, conduit tube 286 may extend along an upstream path from outlet 212 and into dispense chamber 204 from bottom wall 230 before terminating at an intake tip 288. During use, liquid may thus flow to outlet 212 through siphon conduit 280 from intake tip 288. In other words, intake tip 288 may define an aperture to receive liquid from dispense chamber 204 upstream from outlet 212. In some such embodiments, the dispensing threshold 282 or predetermined initiation height is defined above the intake tip 288.

In exemplary embodiments, siphon conduit 280 includes a conduit cap 290. For instance, conduit cap 290 may be disposed on conduit tube 286. In some such embodiments, conduit tube 286 extends along a linear (e.g., vertical or axial) path from bottom wall 230. Additionally or alternatively, conduit cap 290 may be disposed over intake tip 288. Specifically, an upper wall 292 of conduit cap 290 may be held directly above intake tip 288 (e.g., by one or more support arms-not shown-extending between upper wall 292 and conduit tube 286). An outer wall 294 may extend (e.g., downward) from upper wall 292 about conduit tube 286. Specifically, outer wall 294 may be radially spaced apart from conduit tube 286 (e.g., radially outward therefrom). Moreover, outer wall 294 may be vertically spaced apart from bottom wall 230. As shown, an opening or gap 296 maybe defined between conduit cap 290 and conduit tube 286. Thus, liquid may be permitted to pass to intake tip 288 from dispense chamber 204 by flowing through the gap 296 between conduit cap 290 and conduit tube 286. When assembled, conduit cap 290 may define drain threshold 284. For instance, drain threshold 284 may be defined at the lowermost edge of outer wall 294, where the gap 296 between conduit cap 290 and conduit tube 286 begins. Additionally or alternatively, dispensing threshold 282 may be defined above intake tip 288 or conduit cap 290. For instance, dispensing threshold 282 may be defined at or above an uppermost edge of upper wall 292. Advantageously, siphon conduit 280 may occupy a relatively small portion of dispense chamber 204 and permit a compact, space efficient assembly while preventing dripping from outlet 212.

Optionally, conduit cap 290 or siphon conduit 280 may be configured as removable relative to dispensing body 202. For instance, conduit cap 290 may be threaded or otherwise provided with a selective attachment mechanism to selectively thread onto or engage with a mated segment of siphon conduit 280. Additionally or alternatively, siphon conduit 280 may be threaded or otherwise provided with a selective attachment mechanism (e.g., at a bottom portion of conduit tube 286) to selectively thread onto or engage with bottom wall 230.

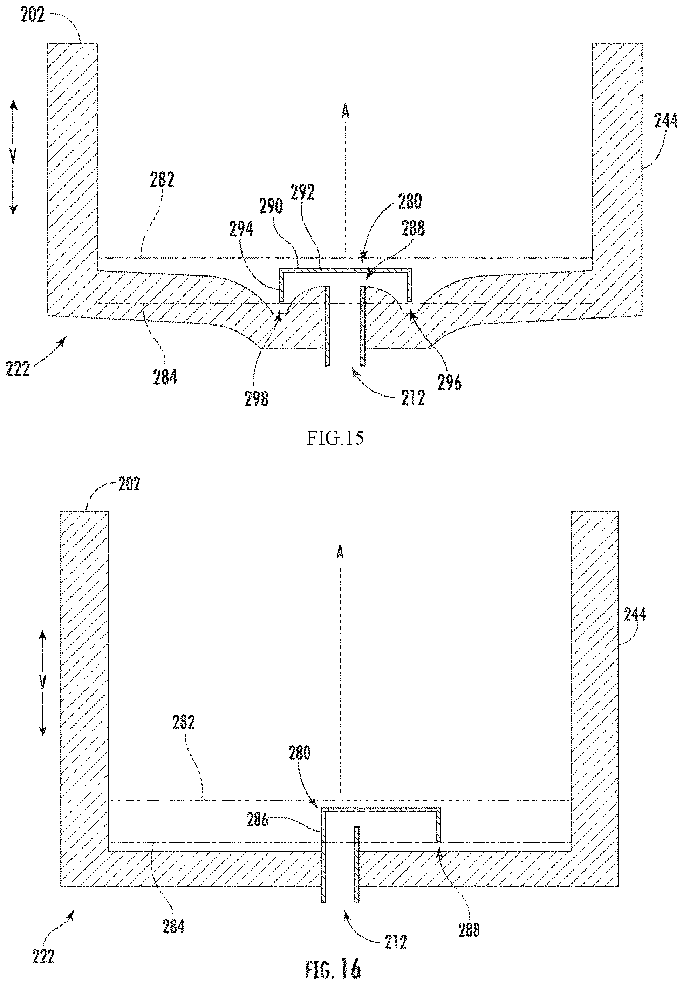

Turning briefly to FIG. 15, in optional embodiments, a recessed channel 298 is defined at bottom wall 230. As shown, recessed channel 298 may extend below intake tip 288 and a portion of bottom wall 230 adjacent to intake tip 288. Moreover, recessed channel 298 may extend circumferentially about conduit tube 286. When assembled, at least a portion of outer wall 294 may be received within recessed channel 298. Specifically, a lowermost edge of outer wall 294 may be held within recessed channel 298 while still remaining spaced apart (e.g., vertically or radially) from bottom wall 230, thereby permitting liquid to pass through recessed channel 298 to intake tip 288.

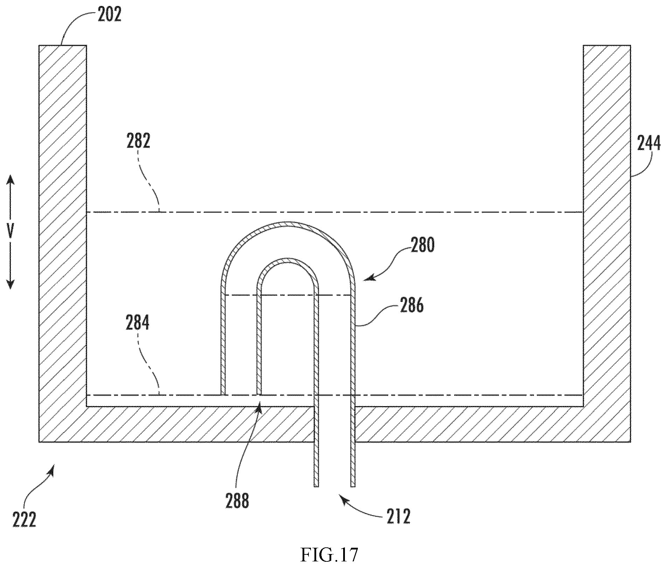

Turning briefly to FIGS. 16 and 17, in other embodiments, siphon conduit 280 extends within dispense chamber 204 along an inverse U-shaped path to direct intake tip 288 downward. Specifically, conduit tube 286 may form the inverse U-shaped path may extend up from the bottom wall 230 before descending the intake tip 288. The intake tip 288 itself may be spaced apart from the bottom wall 230. In some such embodiments, drain threshold 284 is defined at the intake tip 288. In additional or alternative embodiments, dispensing threshold 282 is defined at or above and upper edge of conduit tube 286 (e.g., the apex of the inverse U-shaped path).

Advantageously, the presently disclosed brew module 200 may prevent dripping from outlet 212 reliably or without requiring a separate valve. Additionally or alternatively, the presently disclosed brew module 200 may prevent dripping from outlet 212 without requiring a large amount of space (e.g., within dispense chamber 204 or below brew pod 210) or significant support in order to rest upright on a flat surface (e.g., when removed from appliance 100).

Returning generally to FIGS. 3 through 10, sidewall 232 may extend above bottom wall 230 (e.g., to upper end 220) about dispense chamber 204. Thus, sidewall 232 may define an opening to dispense chamber 204 at upper end 220 through which at least a portion of brew pod 210 may be received. Optionally, an upper notch 242 may be defined as a vertical or axial recess through sidewall 232 at upper end 220. Thus, upper notch 242 may extend through sidewall 232 to form, for instance, a U-shaped radial gap in the sidewall 232 at upper end 220.

In some embodiments, sidewall 232 includes an interior wall 244 and exterior wall 246 radially spaced apart from interior wall 244. For example, one or more intermediate rim 252s may radially join interior wall 244 and exterior wall 246 (e.g., at upper end 220 or lower end 222). Optionally, an insulation gap 248 may be defined between the interior wall 244 and exterior wall 246. Thus, interior wall 244 and exterior wall 246 may radially bound insulation gap 248. Intermediate rim(s) 252 may further axially bound insulation gap 248 (e.g., while extending radially between interior wall 244 and exterior wall 246).

In optional embodiments, mesh cup 234 can be selectively received within dispense chamber 204. Thus, mesh cup 234 may sized smaller than at least a portion of dispense chamber 204 (e.g., at interior wall 244). As shown, mesh cup 234 may include a concave scoop 254. Multiple apertures or holes defined through mesh cup 234 may be sufficiently sized to retain particulate (e.g., coffee grounds, tea leaves, etc.) within mesh cup 234 while still permitting liquid therethrough, as would be understood. Optionally, mesh cup 234 may have a radial rim 256 that holds mesh cup 234 (e.g., on sidewall 232) within dispense chamber 204 such that a lowermost surface of mesh cup 234 is spaced apart from an inner surface of bottom wall 230. Thus, mesh cup 234 may be held above bottom wall 230. Additionally or alternatively, the lowermost surface of mesh cup 234 may be defined as a flat or planar surface. A volume of liquid may thus be permitted to accumulate between mesh cup 234 and bottom wall 230 (e.g., before being dispensed through outlet 212). Opposite from the lowermost surface of mesh cup 234, mush cup may define a cup opening through which particulate or liquid (e.g., liquid water) may be received. In optional embodiments, a handle 258 extends radially outward from mesh cup 234 (e.g., at the primary opening of mesh cup 234, such as would be defined at a top end of mesh cup 234). When assembled such that mesh cup 234 is received within dispense chamber 204, handle 258 may extend through sidewall 232 (e.g., at notch 242, which may be sized to match handle 258) and to a region outside of dispensing body 202, even when lid 208 is attached to dispensing body 202.

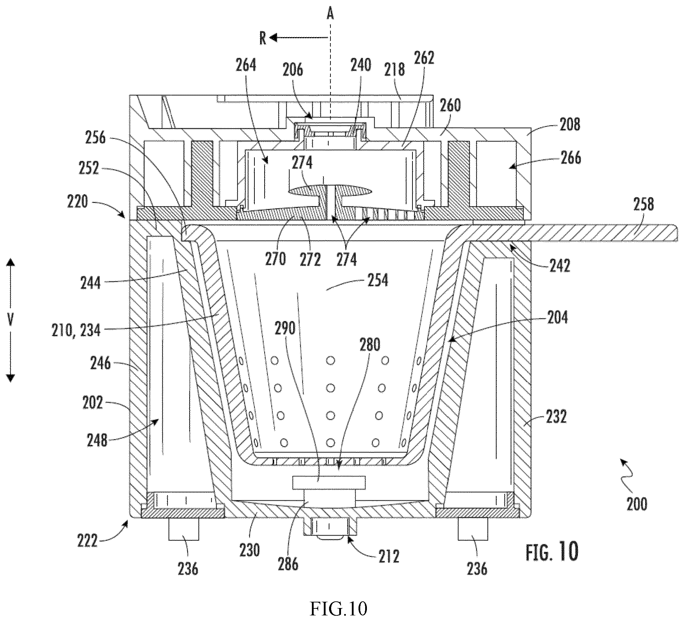

Turning now to FIGS. 10 through 12, various portions of brew module 200 are illustrated. In particular, portions of lid 208 are shown. As noted above, lid 208 may be selectively attached to dispensing body 202. Moreover, lid 208 defines an inlet 206 above and upstream from dispense chamber 204. During use, liquid (e.g., heated water) may thus be provided to dispense chamber 204 through inlet 206 (e.g., from water delivery tube 170).

A resilient uni-directional valve 240 (e.g., silicone one-way valve) is disposed across inlet 206. The resilient uni-directional valve 240 is mounted on or within an upper external wall 260 of lid 208. When assembled, resilient uni-directional valve 240 prevents fluid flow through inlet 206 from dispense chamber 204. In other words, resilient uni-directional valve 240 may direct the flow of liquid downstream through inlet 206 to dispense chamber 204 while preventing a reverse flow of liquid out of the brew module 200 through the inlet 206. Moreover, resilient uni-directional valve 240 may be configured with a preset pressure threshold, as would be understood, to open access dispense chamber 204. After water dispensing tube 170 is removed from lid 208, residual volumes may be prevented from dripping into or from inlet 206.

In certain embodiments, lid 208 defines a sealed sub-chamber 264 below or downstream from inlet 206 to hold a volume of liquid (e.g., water) above or upstream from dispense chamber 204. During use, liquid may thus accumulate within sealed sub-chamber 264 (e.g., from water dispensing tube 170) prior to being permitted to dispense chamber 204. When assembled, sealed sub-chamber 264 may be axially aligned or disposed directly above dispense chamber 204. An internal wall 262 of lid 208 may define sealed sub-chamber 264. Additionally or alternatively, internal wall 262 may be enclosed by an external wall 260. Optionally, internal wall 262 may be nested within external wall 260. In some such embodiments, internal wall 262 is radially and axially bounded (e.g., from above) by external wall 260. An outer sub-chamber 266 may be defined between external wall 260 and internal wall 262 (e.g., in fluid isolation from inlet 206). Advantageously, heated water may be focused to dispense chamber 204 while splatter or disruption of particulate from dispense chamber 204 may be prevented.

A distributor plate 270 is provided between inlet 206 and dispense chamber 204. The distributor plate 270 is mounted within lid 208 (e.g., inside or directly below sealed sub-chamber 264). As shown, distributor plate 270 includes a dispersion head 272 and a base platform 274. When assembled, base platform 274 extends across an opening to dispense chamber 204 (e.g., defined by lid 208). Dispersion head 272 extends above base platform 274. Optionally, dispersion head 272 may be axially aligned with inlet 206 or dispense chamber 204. Dispersion head 272 provides a concave guiding surface. Base platform 274 may extend (e.g., radially) outward from dispersion head 272.

Distributor plate 270 generally defines a plurality of plate apertures 276 that extend (e.g., vertically or axially) through distributor plate 270 and through which water is permitted to flow (e.g., from lid 208 or sealed sub-chamber 264) to dispense chamber 204. Specifically, a plurality of radially spaced plate apertures 276 are defined by base platform 274 to permit water (e.g., from the dispersion head 272 or water dispensing tube 170) to the dispense chamber 204. Optionally, one or more additional plate apertures 276 may be defined by dispersion head 272 to permit water therethrough to dispense chamber 204.

During use, dispersion head 272 may serve to deflect or slow the flow of water to base platform 274 and dispense chamber 204. Moreover, flowing water may be distributed across an increased area of dispense chamber 204. Advantageously, liquid or water to dispense chamber 204 may be evenly flowed to particulate within brew pod 210 in a controlled manner. Additionally or alternatively, particulate may be prevented from being dislodged from dispense chamber 204 and, for example, being forced into lid 208.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A beverage dispensing assembly (140) for use with an appliance (100), the beverage dispensing assembly (140) defining a dispenser axis (A) and comprising:
a dispensing body (202) defining a dispense chamber (204), the dispensing body (202) extending along the dispenser axis (A) between an upper end (220) and a lower end (222), the dispensing body (202) comprising a wall (230) defining an outlet (212) at the lower end (222);
a siphon conduit (280) extending from the wall (230) within the dispense chamber (204) upstream of the outlet (212), the siphon conduit (280) defining a dispensing threshold (282) above the outlet (212) to set a predetermined initiation height of liquid dispensing from the dispense chamber (204), the siphon conduit (280) further defining a drain threshold (284) below the dispensing threshold (282) to set a predetermined cut-off height of liquid dispensing from the dispense chamber (204);
a lid (208) selectively attached to the dispensing body (202) at the upper end (220), wherein the lid (208) defines an inlet (206) above the dispense chamber (204),
**characterised in that**:
a resilient uni-directional valve (240) is disposed across the inlet (206) and mounted on or within an upper external wall (260) of the lid (208) such that, when assembled, the resilient uni-directional valve (240) prevents fluid flow through the inlet (206) from the dispense chamber (204);
a distributor plate (270) that is provided between the inlet (206) and the dispense chamber (204) and mounted within the lid (208), wherein the distributor plate (270) includes a dispersion head (272) providing a concave guiding surface and a base platform (274) that, when assembled, is extending across an opening to the dispense chamber (204) and extending outward from the dispersion head (272), wherein the dispersion head (272) extends above the base platform (274); and
a plurality of radially spaced plate apertures (276) defined by the base platform (274) to permitting water to the dispense chamber (204).

2. The beverage dispensing assembly (140) of claim 1, wherein the siphon conduit (280) comprises a conduit tube (286) extending from the wall (230) within the dispense chamber (286), and wherein the dispensing threshold (282) is defined above an intake tip (288) of the conduit tube (286).

3. The beverage dispensing assembly (140) of claim **1,** wherein the siphon conduit (280) comprises a conduit tube (286) extending from the wall (230) within the dispense chamber (204) and a conduit cap (290) disposed on the conduit tube (286) over an intake tip (288) of the conduit tube (286), wherein the conduit cap (290) defines the drain threshold (284).

4. The beverage dispensing assembly (140) of claim 3, wherein the wall (230) defines a recessed channel (298) extending below the intake tip (288), and wherein an outer wall (294) of the conduit cap (290) is received within the recessed channel (298).

5. The beverage dispensing assembly (140) of claim **1,** wherein the siphon conduit (280) comprises a conduit tube (286) extending within the dispense chamber (204) along an inverse U-shaped path from the wall (230) to an intake tip (288) directed downward.

6. The beverage dispensing assembly (140) of claim **1,** further comprising a brew pod (210) selectively received within the dispense chamber (204).

7. The beverage dispensing assembly (140) of claim 6, wherein the brew pod (210) comprises a mesh cup (234) selectively received within the dispense chamber (204).

8. The beverage dispensing assembly (140) of claim 7, wherein the mesh cup (234) is held on the dispensing body (202) above the wall (230).

9. The beverage dispensing assembly (140) of claim 7, wherein the dispensing body (202) further comprises a sidewall (232) disposed about the dispense chamber (204), and wherein the mesh cup (234) comprises a concave scoop (254) and a handle (258) extending radially from the concave scoop (254) through the sidewall (232).

10. The beverage dispensing assembly (140) of claim 1, wherein the siphon conduit (280) is removably attached to the wall (230).

11. The beverage dispensing assembly (140) of claim 6 further comprising:
wherein the lid (208) defining the inlet (206) above and upstream from the dispense chamber (204),
wherein the brew pod (210) is selectively received within the dispense chamber (204) between the inlet (206)and the outlet (212) along the dispenser axis (A).

12. The beverage dispensing assembly (140) of claim 11, wherein the siphon conduit (280) comprises a conduit tube (286) extending from the wall (230) within the dispense chamber (204) and a conduit cap (290) disposed on the conduit tube (286) over an intake tip (288) of the conduit tube (286) , wherein the conduit cap (290) defines the drain threshold (284);
the wall (230) defines a recessed channel (298) extending below the intake tip (288), and wherein an outer wall (294) of the conduit cap (290) is received within the recessed channel (298).

13. The beverage dispensing assembly (140) of claim 11, wherein the brew pod (210) comprises a mesh cup (234) selectively received within the dispense chamber (204);
the mesh cup (234) is held on the dispensing body (202) above the wall (230);
the dispensing body (202) further comprises a sidewall (232) disposed about the dispense chamber (204), and wherein the mesh cup (234) comprises a concave scoop (254) and a handle (258) extending radially from the concave scoop (254) through the sidewall (232).

14. The beverage dispensing assembly (140) of claim 11, wherein the siphon conduit (280) is removably attached to the wall (230).

## Patentansprüche

1. Eine Getränkeausgabeanordnung (140) zur Verwendung mit einem Gerät (100), wobei die Getränkeausgabeanordnung (140) eine Ausgeberachse (A) definiert und umfasst:
einen Ausgabekörper (202), der eine Ausgabekammer (204) definiert, wobei sich der Ausgabekörper (202) entlang der Ausgeberachse (A) zwischen einem oberen Ende (220) und einem unteren Ende (222) erstreckt, wobei der Ausgabekörper (202) eine Wand (230) umfasst, die am unteren Ende (222) einen Auslass (212) definiert;
eine Heberleitung (280), die sich von der Wand (230) innerhalb der Ausgabekammer (204) stromaufwärts des Auslasses (212) erstreckt, wobei die Heberleitung (280) oberhalb des Auslasses (212) eine Ausgabeschwelle (282) definiert, um eine vorbestimmte Einleitungshöhe einer Flüssigkeitsausgabe aus der Ausgabekammer (204) festzulegen, wobei die Heberleitung (280) ferner eine Ablaufschwelle (284) unterhalb der Ausgabeschwelle (282) definiert, um eine vorbestimmte Abschalthöhe der Flüssigkeitsausgabe aus der Ausgabekammer (204) festzulegen;
einen Deckel (208), der selektiv am Ausgabekörper (202) am oberen Ende (220) befestigt ist, wobei der Deckel (208) einen Einlass (206) oberhalb der Ausgabekammer (204) definiert,
**dadurch gekennzeichnet, dass**
ein elastisches Rückschlagventil (240) über dem Einlass (206) angeordnet und auf oder innerhalb einer oberen Außenwand (260) des Deckels (208) montiert ist, so dass das elastische Rückschlagventil (240) im zusammengebauten Zustand einen Fluidstrom durch den Einlass (206) aus der Ausgabekammer (204) verhindert;
eine Verteilerplatte (270), die zwischen dem Einlass (206) und der Ausgabekammer (204) vorgesehen und innerhalb des Deckels (208) montiert ist, wobei die Verteilerplatte (270) einen Verteilerkopf (272), der eine konkave Führungsfläche bereitstellt, und eine Basisplattform (274) umfasst, die sich im zusammengebauten Zustand über eine Öffnung zur Ausgabekammer (204) erstreckt und sich vom Verteilerkopf (272) nach außen erstreckt, wobei sich der Verteilerkopf (272) oberhalb der Basisplattform (274) erstreckt; und
eine Vielzahl von radial beabstandeten Plattenöffnungen (276), die durch die Basisplattform (274) definiert sind, um Eintritt von Wasser in die Ausgabekammer (204) zu ermöglichen.

2. Die Getränkeausgabeanordnung (140) nach Anspruch 1, wobei die Heberleitung (280) ein Leitungsrohr (286) umfasst, das sich von der Wand (230) innerhalb der Ausgabekammer (286) erstreckt, und wobei die Ausgabeschwelle (282) oberhalb einer Einlassspitze (288) des Leitungsrohrs (286) definiert ist.

3. Die Getränkeausgabeanordnung (140) nach Anspruch 1, wobei die Heberleitung (280) ein Leitungsrohr (286), das sich von der Wand (230) innerhalb der Ausgabekammer (204) erstreckt, und eine Leitungskappe (290) umfasst, die auf dem Leitungsrohr (286) über einer Einlassspitze (288) des Leitungsrohrs (286) angeordnet ist, wobei die Leitungskappe (290) die Ablaufschwelle (284) definiert.

4. Die Getränkeausgabeanordnung (140) nach Anspruch 3, wobei die Wand (230) einen vertieften Kanal (298) definiert, der sich unterhalb der Einlassspitze (288) erstreckt, und wobei eine Außenwand (294) der Leitungskappe (290) innerhalb des vertieften Kanals (298) aufgenommen ist.

5. Die Getränkeausgabeanordnung (140) nach Anspruch 1, wobei die Heberleitung (280) ein Leitungsrohr (286) umfasst, das sich innerhalb der Ausgabekammer (204) entlang eines umgekehrt U-förmigen Pfades von der Wand (230) zu einer nach unten gerichteten Einlassspitze (288) erstreckt.

6. Die Getränkeausgabeanordnung (140) nach Anspruch 1, ferner umfassend eine Brühkapsel (210), die selektiv innerhalb der Ausgabekammer (204) aufgenommen ist.

7. Die Getränkeausgabeanordnung (140) nach Anspruch 6, wobei die Brühkapsel (210) einen Siebbecher (234) umfasst, der selektiv innerhalb der Ausgabekammer (204) aufgenommen ist.

8. Die Getränkeausgabeanordnung (140) nach Anspruch 7, wobei der Siebbecher (234) am Ausgabekörper (202) oberhalb der Wand (230) gehalten wird.

9. Die Getränkeausgabeanordnung (140) nach Anspruch 7, wobei der Ausgabekörper (202) ferner eine Seitenwand (232) umfasst, die um die Ausgabekammer (204) angeordnet ist, und wobei der Siebbecher (234) eine konkave Schaufel (254) und einen Griff (258) umfasst, der sich radial von der konkaven Schaufel (254) durch die Seitenwand (232) erstreckt.

10. Die Getränkeausgabeanordnung (140) nach Anspruch 1, wobei die Heberleitung (280) abnehmbar an der Wand (230) befestigt ist.

11. Die Getränkeausgabeanordnung (140) nach Anspruch 6, ferner umfassend:
wobei der Deckel (208) den Einlass (206) oberhalb und stromaufwärts von der Ausgabekammer (204) definiert,
wobei die Brühkapsel (210) selektiv innerhalb der Ausgabekammer (204) zwischen dem Einlass (206) und dem Auslass (212) entlang der Ausgeberachse (A) aufgenommen ist.

12. Die Getränkeausgabeanordnung (140) nach Anspruch 11, wobei die Heberleitung (280) ein Leitungsrohr (286), das sich von der Wand (230) innerhalb der Ausgabekammer (204) erstreckt, und eine Leitungskappe (290) umfasst, die auf dem Leitungsrohr (286) über einer Einlassspitze (288) des Leitungsrohrs (286) angeordnet ist, wobei die Leitungskappe (290) die Ablaufschwelle (284) definiert;
wobei die Wand (230) einen vertieften Kanal (298) definiert, der sich unterhalb der Einlassspitze (288) erstreckt, und wobei eine Außenwand (294) der Leitungskappe (290) innerhalb des vertieften Kanals (298) aufgenommen ist.

13. Die Getränkeausgabeanordnung (140) nach Anspruch 11, wobei die Brühkapsel (210) einen Siebbecher (234) umfasst, der selektiv innerhalb der Ausgabekammer (204) aufgenommen ist;
wobei der Siebbecher (234) am Ausgabekörper (202) oberhalb der Wand (230) gehalten wird;
wobei der Ausgabekörper (202) ferner eine Seitenwand (232) umfasst, die um die Ausgabekammer (204) angeordnet ist, und wobei der Siebbecher (234) eine konkave Schaufel (254) und einen Griff (258) umfasst, der sich radial von der konkaven Schaufel (254) durch die Seitenwand (232) erstreckt.

14. Die Getränkeausgabeanordnung (140) nach Anspruch 11, wobei die Heberleitung (280) abnehmbar an der Wand (230) befestigt ist.

## Revendications

1. Ensemble de distribution de boissons (140) destiné à être utilisé avec un appareil (100), l'ensemble de distribution de boissons (140) définissant un axe de distribution (A) et comprenant:
un corps de distribution (202) définissant une chambre de distribution (204), le corps de distribution (202) s'étendant le long de l'axe de distribution (A) entre une extrémité supérieure (220) et une extrémité inférieure (222), le corps de distribution (202) comprenant une paroi (230) définissant une sortie (212) au niveau de l'extrémité inférieure (222);
un conduit de siphon (280) s'étendant depuis la paroi (230) à l'intérieur de la chambre de distribution (204) en amont de la sortie (212), le conduit de siphon (280) définissant un seuil de distribution (282) au-dessus de la sortie (212) afin de fixer une hauteur prédéterminée de déclenchement de la distribution de liquide depuis la chambre de distribution (204), le conduit de siphon (280) définissant en outre un seuil de vidange (284) situé en dessous du seuil de distribution (282) afin de fixer une hauteur d'arrêt prédéterminée pour la distribution de liquide à partir de la chambre de distribution (204);
un couvercle (208) fixé de manière sélective au corps de distribution (202) au niveau de l'extrémité supérieure (220), dans lequel le couvercle (208) définit une entrée (206) au-dessus de la chambre de distribution (204),
**caractérisé en ce que**
une soupape unidirectionnelle élastique (240) est disposée en travers de l'entrée (206) et montée sur ou à l'intérieur d'une paroi externe supérieure (260) du couvercle (208) de telle sorte que, une fois assemblée, la soupape unidirectionnelle élastique (240) empêche l'écoulement de fluide à travers l'entrée (206) depuis la chambre de distribution (204);
une plaque de distribution (270) qui est prévue entre l'entrée (206) et la chambre de distribution (204) et montée à l'intérieur du couvercle (208), la plaque de distribution (270) comprenant une tête de dispersion (272) présentant une surface de guidage concave et une plate-forme de base (274) qui, une fois assemblée, s'étend en travers d'une ouverture donnant sur la chambre de distribution (204) et s'étend vers l'extérieur à partir de la tête de dispersion (272), la tête de dispersion (272) s'étendant au-dessus de la plate-forme de base (274); et
une pluralité d'ouvertures (276) espacées radialement, définies par la plate-forme de base (274), permettant à l'eau d'accéder à la chambre de distribution (204).

2. L'ensemble de distribution de boisson (140) selon la revendication 1, dans lequel le conduit à siphon (280) comprend un tube de conduit (286) s'étendant depuis la paroi (230) à l'intérieur de la chambre de distribution (286), et dans lequel le seuil de distribution (282) est défini au-dessus d'un embout d'admission (288) du tube de conduit (286).

3. Ensemble de distribution de boissons (140) selon la revendication 1, dans lequel le conduit de siphon (280) comprend un tube de conduit (286) s'étendant depuis la paroi (230) à l'intérieur de la chambre de distribution (204) et un capuchon de conduit (290) disposé sur le tube de conduit (286) au-dessus d'un embout d'admission (288) du tube de conduit (286), le capuchon de conduit (290) définissant le seuil de vidange (284).

4. L'ensemble de distribution de boissons (140) selon la revendication 3, dans lequel la paroi (230) définit un canal en retrait (298) s'étendant sous l'embout d'admission (288), et dans lequel une paroi extérieure (294) du capuchon de conduit (290) est logée dans le canal en retrait (298).

5. Ensemble de distribution de boissons (140) selon la revendication 1, dans lequel le conduit à siphon (280) comprend un tube de conduit (286) s'étendant à l'intérieur de la chambre de distribution (204) le long d'un trajet en forme de U inversé, depuis la paroi (230) jusqu'à un embout d'aspiration (288) dirigé vers le bas.

6. Ensemble de distribution de boissons (140) selon la revendication 1, comprenant en outre une dosette d'infusion (210) logée de manière sélective à l'intérieur de la chambre de distribution (204).

7. Ensemble de distribution de boissons (140) selon la revendication 6, dans lequel la dosette d'infusion (210) comprend une coupelle en filet (234) logée de manière sélective à l'intérieur de la chambre de distribution (204).

8. Ensemble de distribution de boissons (140) selon la revendication 7, dans lequel la coupelle en filet (234) est maintenue sur le corps de distribution (202) au-dessus de la paroi (230).

9. Ensemble de distribution de boissons (140) selon la revendication 7, dans lequel le corps de distribution (202) comprend en outre une paroi latérale (232) disposée autour de la chambre de distribution (204), et dans lequel la coupelle en filet (234) comprend une cuillère concave (254) et une poignée (258) s'étendant radialement depuis la cuillère concave (254) à travers la paroi latérale (232).

10. Ensemble de distribution de boisson (140) selon la revendication 1, dans lequel le conduit de siphon (280) est fixé de manière amovible à la paroi (230).

11. L'ensemble de distribution de boissons (140) selon la revendication 6, comprenant en outre:
dans lequel le couvercle (208) définit l'entrée (206) au-dessus et en amont de la chambre de distribution (204),
dans lequel la dosette d'infusion (210) est reçue de manière sélective à l'intérieur de la chambre de distribution (204) entre l'entrée (206) et la sortie (212) le long de l'axe (A) du distributeur.

12. Ensemble de distribution de boisson (140) selon la revendication 11, dans lequel le conduit de siphon (280) comprend un tube de conduit (286) s'étendant depuis la paroi (230) à l'intérieur de la chambre de distribution (204) et un capuchon de conduit (290) disposé sur le tube de conduit (286) au-dessus d'un embout d'admission (288) du tube de conduit (286), le capuchon de conduit (290) définissant le seuil de vidange (284);
la paroi (230) définit un canal en retrait (298) s'étendant sous l'embout d'admission (288), et dans lequel une paroi extérieure (294) du capuchon de conduit (290) est logée dans le canal en retrait (298).

13. Ensemble de distribution de boisson (140) selon la revendication 11, dans lequel la dosette d'infusion (210) comprend une coupelle en filet (234) logée de manière sélective dans la chambre de distribution (204);
la coupelle en filet (234) est maintenue sur le corps de distribution (202) au-dessus de la paroi (230);
le corps de distribution (202) comprend en outre une paroi latérale (232) disposée autour de la chambre de distribution (204), et dans lequel la coupelle en filet (234) comprend une cuvette concave (254) et une poignée (258) s'étendant radialement depuis la cuvette concave (254) à travers la paroi latérale (232).

14. L'ensemble de distribution de boisson (140) selon la revendication 11, dans lequel le conduit de siphon (280) est fixé de manière amovible à la paroi (230).
